Europäisches Patentamt

European Patent Office

Office européen des brevets

(19)

(11) Publication number: **0 329 873 B1**

# EUROPEAN PATENT SPECIFICATION

(12)

(45) Date of publication of patent specification: **30.09.92** (51) Int. Cl.⁵: **C08F 297/00**, C09B 67/46

(21) Application number: **88301552.1**

(22) Date of filing: **23.02.88**

(54) **Block copolymer dispersants.**

(43) Date of publication of application:
**30.08.89 Bulletin 89/35**

(45) Publication of the grant of the patent:
**30.09.92 Bulletin 92/40**

(84) Designated Contracting States:
**AT BE CH DE ES FR GB IT LI LU NL SE**

(56) References cited:
**EP-A- 0 248 596      WO-A-87/05924
FR-A- 2 085 902      FR-A- 2 091 597
FR-A- 2 186 526      US-A- 3 287 298**

(73) Proprietor: **E.I. DU PONT DE NEMOURS AND
COMPANY
1007 Market Street
Wilmington Delaware 19898(US)**

(72) Inventor: **West, Michael Wendell Johnson
145 Devonshire Road
Wilmington, DE 19803(US)**

(74) Representative: **Jones, Alan John et al
CARPMAELS & RANSFORD 43 Bloomsbury
Square
London, WC1A 2RA(GB)**

**Description**

BACKGROUND OF THE INVENTION

Polymeric materials have previously been known which are effective for dispersing pigments in organic liquids. Such polymeric dispersants are typically of the AB or BAB types, in which a polar group known as the A segment is present in the molecule to facilitate attachment to a pigment surface, and at least one non-polar portion known as the B segment is present to enhance steric stabilization of the pigment particles in a dispersion.

Baker et al, in U. S. Patent 3,912,677, disclose the benefits of polymers containing ionic groups, in specific cases where the ionic groups are in the form of a salt with a salt-forming component or counterion. The salt-forming component has an affinity for the surface of organic pigment particles, and is capable of reaction with the polar-bound ionic group so as to form a salt. However, continued effort has been directed to improve the performance of polymeric dispersants, and to find effective dispersants that do not require the use of special salt-forming components, the use of which complicates the manufacture of the dispersants, and can introduce undesirable color.

FR-A-2 085 902 discloses certain water-in-oil or oil-in water emulsions based on certain block copolymers comprising a lipophilic sequence, e.g. polystyrene, and a hydrophilic sequence, e.g poly vinyl-2-pyridine. These emulsions are for cosmetic use.

SUMMARY OF THE INVENTION

The present invention is based on the discovery that block copolymers composed of similar monomers, but which exhibit substantially different polarity, one of the blocks having cationic ammonium, phosphonium, or sulfonium moieties, provide excellent performance as pigment dispersants, without the need for special salt-forming components.

Specifically, the instant invention provides a substantially non-aqueous dispersion comprising pigment, organic liquid and a block copolymer consisting essentially of

(a) about from 0.1 to 50 %, by weight of the copolymer, of at least one block having a number average molecular weight of about from 200 to 10,000 and prepared from at least one monomer selected from compounds of the general formulas $CH_2 = CHCO_2R$ and $CH_2 = CCH_3CO_2R$, wherein R is alkyl or alkyl ether of 1-20 carbon atoms, the block further containing at least 2 ionic moieties which are pendant from the R groups and have the general formula $-A(R_1)_mX$, wherein A is selected from N, P, and S; $R_1$ is independently selected from alkyl or alkyl ether of 1-20 carbon atoms, phenyl or substituted phenyl, m is 3 when A is N or P, and m is 2 when A is S, and X is selected from halides and conjugate bases of organic acids, the backbone of the block being prepared from ethylenically unsaturated units, and

(b) about from 99.9 to 50 %, by weight of the copolymer, of at least one block having a number average molecular weight of about from 500 to 100,000 and prepared from monomers selected from compounds of the general formulas $CH_2 = CHCO_2R$ and $CH_2 = CCH_3CO_2R$, wherein R is alkyl or alkyl ether of 1-20 carbon atoms.

Additionally, this invention provides a substantially non-aqueous dispersion comprising pigment, organic liquid, and a block copolymer consisting essentially of

(a) about from 0.1 to 50%, by weight of the copolymer, of at least one block having a number average molecular weight of about from 200 to 10,000 and prepared from at least one monomer selected from compounds of the general formulas $CH_2 = CHCO_2R$ and $CH_2 = CCH_3CO_2R$, wherein R is alkyl or alkyl ether of 1-20 carbon atoms, the block further containing at least 2 ionic moieties which are pendant from the R groups and have the general formula $-A(R_1)_mX$, wherein A is selected from N, P, and S; $R_1$ is independently selected from alkyl or alkyl ether of 1-20 carbon atoms, phenyl or substituted phenyl, m is 3 when A is N or P, and m is 2 when A is S, and X is selected from halides and conjugate bases of organic acids, the backbone of the block being prepared from ethylenically unsaturated units, and

(b) about from 99.9 to 50%, by weight of the copolymer, of at least one block having a number average molecular weight of about from 500 to 100,000 and prepared from monomers selected from compounds of the general formulas $CH_2 = CHCO_2R$ wherein R is alkyl or alkyl ether of 1-20 carbon atoms and $CH_2 = CCH_3CO_2R$, wherein R is alkyl or alkyl ether of 1-4 carbon atoms.

Preferred dispersions are those wherein the block copolymer is of the BAB configuration in which the copolymer contains at least two blocks of the type defined in (b).

The copolymers can be, and preferably are, prepared by group transfer polymerisation techniques, and exhibit excellent performance as dispersants in the dispersions and do not require salt-forming counter-ions for satisfactory performance.

DETAILED DESCRIPTION OF THE INVENTION

Monomers which can be used in the preparation of the dispersants used in the dispersions of the present invention include those acrylates and methacrylates described in Webster, U.S.-A-4,508,880 at column 8, lines 4 to 58, with the exception of 3-methacryl-oxypropyl acrylate; and 2-methacryloxyethyl acrylate and linalate. Monomers which are preferred for the first (a) block of the copolymer, containing the pendant ionic groups, include dimethyl aminoethyl methacrylate and diethyl aminoethyl methacrylate. Monomers which are preferred for the second (b) block of the copolymers include methyl methacrylate, butyl methacrylate and 2-ethylhexyl methacrylate, especially butyl methacrylate and 2-ethylhexyl methacrylate.

The polymers of the present invention can be prepared by conventional anionic polymerization techniques, in which a first block of the copolymer is formed, and, upon completion of the first block, a second monomer stream is started to form a subsequent block of the polymer. However, the reaction temperatures using such techniques should be maintained at a low level, for example, 0 to -40 degrees Centigrade, so that side reactions are minimized and the desired blocks, of the specified molecular weights, are obtained.

To attain the desired molecular weight of each block as well as uniformity in the blocks, Group Transfer Polymerization techniques are advantageously, and preferably, used, such as those described in the aforementioned Webster, U.S.-A-4,508,880. In accordance with that process, an unsaturated monomer is contacted with an initiator and a catalyst system containing silicon, tin or germanium, under which the polymerization proceeds in a controlled manner, as opposed the random manner typical of polymerisation reactions, so that a substantially linear polymer can be prepared having polymer chains which are uniform and of the desired molecular weight.

In the preparation of dispersants used in the present invention, the order in which the blocks are prepared is not critical. Either the block containing the pendant ionic moieties or the block not containing these moieties can be prepared first.

Catalysts which can be used include those disclosed in U.S.-A-4,508,880 at column 11, lines 42 to 68.

Initiators which can be used include those indicated in the aforementioned Webster patent at Column 9, line 25 to Column 10 line 13. Preferred initiators include 1-(2-trimethyl-siloxyethoxy)-1-trimethylsiloxy-2-methylpropene; 1-(2-[1-ethoxyethoxy)-ethoxy-1-trimethylsiloxy-2-methylpropene; and 1-methoxy-1-trimethylsiloxy-2-methylpropene.

If the dispersant is prepared by first forming the block without the pendant ionic groups, then these blocks are reacted, using the same general procedures, to form the blocks containing the pendant ionic groups. The same general reactants are used for these second blocks, except that the monomers and their relative quantities are selected to have an average of at least two cationic units, or their precursors, in each block. The cationic units can be in the required quaternary or tertiary configuration as polymerized, or, more typically and preferably, can be primary, secondary or tertiary amine, phosphine or thioether compounds which are converted to the quaternary or tertiary state after the formation of the basic polymer structure. While a wide variety of monomers can be so used, methacrylates have been found to be particularly satisfactory, including, for example, 2-(dimethylamino)ethyl methacrylate, 2-(diethylamino)ethyl methacrylate, glycidyl methacrylate, and t-butyl aminoethyl methacrylate. Similar monomers can be used to introduce ionic groups based on phosphorus and sulfur, as will be evident to the skilled artisan.

The pendant ionic moieties have the general formula $-A(R_1)_mX$, wherein A is selected from N, P, and S, $R_1$ are independently selected from alkyl or alkyl ether of 1-20 carbon atoms, phenyl or substituted phenyl, m is 3 when A is N or P, and m is 2 when A is S, and X is selected from halides and conjugate bases of organic acids. Preferably, A is nitrogen, and X is selected from the group consisting of carboxylates, sulfonates and phosphates.

After formation of the basic polymer structure, the cationic precursor can be brought into contact with conventional alkylation agents such as an alkyl halide, alkyl sulfonate, alkyl toluene sulfonate, trialkyl phosphate or aralkyl halide. Alkylation agents which have been found to be particularly satisfactory include methyl toluene sulfonate, dimethyl sulfate, and benzyl chloride.

The physical characteristics of the block copolymers used in the present invention, including the molecular weight of the blocks and the presence of the ionic moieties on one of the blocks, can be confirmed by conventional analytical techniques, including differential scanning calorimetry, nuclear magnetic resonance, gas chromatography and infrared analysis. For example, the chemical composition of the blocks can be determined by proton nuclear magnetic resonance or infrared analysis, or by pyrolysis and gas chromatographic analysis. The block sizes in the copolymers can be determined by nuclear magnetic resonance, glass transition temperature, solubility or micelle formation as measured by quasi-elastic light scattering.

The resulting block copolymers exhibit excellent performance as dispersants. Accordingly, they can be used effectively as pigment dispersants in paint formulations and as oil additives. Pigment dispersions typically comprise pigment, solvent and dispersant, and can be prepared, for example, as described in Baker et al, U.S.-A-3,912,677. While similar compounds have been so used in the past, the present copolymers are effective without the use of counter-ions such as ionized rosin acid or sulfonated aromatic hydrocarbon that have been previously found necessary for satisfactory dispersant performance. In addition, the uniform block character in the present compounds provides improved and more reliable dispersant performance.

In the following Examples, dispersant quality is measured by sand grinding a mixture of pigment, solvent and dispersant and determining what proportion of dispersant (if any) will give a uniform dispersion, appearing like stained glass at an optical magnification of 250x. In contrast, flocculated pigment has islands of color interspersed with areas of relatively clear solvent. The degree of dispersion is evaluated on an arbitrary scale of 1 to 4 as follows:

1 - deflocculated dispersion in which pigmented particles are uniformly separated and in which brownian motion of particles is evident.

2 - slightly flocculated dispersion in which pigment particles are separated but immobile (no significant evidence of brownian motion).

3 - flocculated dispersions in which pigment particles are loosely aggregated with some voids between aggregates.

4 - severely flocculated dispersions in which pigment particles are highly aggregated with large voids between aggregates.

The dispersants prepared in the Examples were evaluated with a variety of standard pigments and in solvents. The solvents used were methylisobutyl ketone (MIBK or M), toluene (T), xylenes (X), and acetone (A). The following standard pigments were used in the evaluation:

W505 - phthalocyanine blue, red toned (monastral blue)

W552 - phthalocyanine blue, flocculation resistant green shade, toner

W573 - tetrachloro CPC blue; phthalocyanine blue toner, green shade, improved rheology

W673 - tetrachloro isoindolinone - irgazin yellow

W805 - monastral magenta - quinacridone type magenta toner

W811 - monastral red - quinacridone type red toner

W853 - organic red tone - quinacridone type - monastral transparent red B RT-233

In all Examples of the invention, the blocks of the copolymers containing the pendant ionic groups had a molecular weight of about from 200 to 10,000, and the blocks without the pendant ionic groups had a molecular weight of about from 500 to 100,000. The specific molecular weights can be determined by the skilled artisan from the data appearing in the particular Examples. In all Examples of the invention, an average of at least 2 pendant ionic groups were present in each block (a) of the copolymer prepared.

Example 1

A reaction vessel was charged with 316 g tetrahydrofuran (THF), 0.5 mL xylenes, 4.1 g 1-methoxy-1-trimethylsiloxy-2-methylpropene ("initiator"), and 0.100 mL 1 M tetrabutylammonium 3-chlorobenzoate in acetonitrile ("catalyst"). To prepare an A block free from pendant ionic groups, two feeds were begun simultaneously; 91.2 g of methyl methacrylate (MMA) was added in 20 minutes, and 0.350 mL catalyst in 3 ml THF was added over 2 hours. Twenty minutes after the addition of the MMA, 28.9 g of 2-N,N-dimethylaminoethyl methacrylate (DMAEMA) was added over 10 minutes for the preparation of a block containing pendant ionic groups. Twenty minutes after the addition of the DMAEMA, 91.9 g of MMA was added over 20 minutes. One hour after the second addition of MMA, 5 mL of methanol was added. The resin (251 g) was added to heptane (700 mL), the resulting solid was separated from the liquid, and the solid was washed with 700 mL of heptane and dried.

To quaternize the amine groups in the resulting block copolymer, a portion (30.69 g) of the copolymer was dissolved in THF (50.5 g) and benzyl chloride (3.0 g) was added. The resulting solution was refluxed for about 3 hours before the addition of 50.5 g isopropanol. Refluxing was continued for 5 more hours. The resulting resin showed a solids content of 22 % and an tertiary amine content of 0.31 mM/gram, indicating substantially complete quaternization of the amine groups.

The copolymer was evaluated as a pigment dispersant, and exhibited a dispersion rating of 1 in MIBK (M1) for standard pigments W505, W552, W573, W673, W805, and W811. The copolymer was also evaluated with standard pigment W853 in MIBK, acetone and toluene to give ratings of M3, A1 and T3, respectively.

Examples 2-4 and Comparative Example A

In Comparative Example A, an ABA block copolymer was prepared having tertiary pendant ionic groups attached to the B segment. The general composition of the block copolymer was MMA/BMA//DMAEMA//MMA/BMA in expected degrees of polymerization of 20/20//8//20/20. In Examples 2-4, this block copolymer was quaternized with three different quaternizing agents to form a composition of the present invention.

In Comparative Example A, a reaction vessel was charged with 1361 g THF, 21.5 g initiator, and 1.2 mL catalyst. A feed of 581.5 g of 41.3 wt % MMA in butyl methacrylate was added over 20 minutes, while an ice bath was used to maintain the reaction temperature between 20 and 35 C. Simultaneously, a 150 minute feed of 2.4 ml catalyst in 2.6 ml THF was started. Forty-five minutes after the end of the first monomer feed, a twenty minute feed of 173.3 g of 2,-N,N-dimethylaminoethyl methacrylate was added. Forty minutes after the end of the second monomer feed, a twenty minute feed of 505.1 g of 41.3 wt % MMA in BMA was added. Ice cooling was again used. After about 16 hours, 40 ml of methanol was added.

The resulting block copolymer with tertiary pendant ionic groups was evaluated as a pigment dispersant, and the results summarized in Table I.

In Example 2, a reaction mixture of 513.2 g of the block copolymer of Comparative Example A, 126 g ethanol, and 25.0 g iodomethane was refluxed for three hours. The resulting block copolymer, with quaternized pendant ionic groups, was evaluated as a pigment dispersant, and the results summarized in Table I.

In Example 3, a reaction mixture of 500.2 g of the block copolymer of Comparative Example A, 125 g ethanol, and 30.3 g benzyl bromide was refluxed for sixteen hours. The resulting block copolymer, with quaternized pendant ionic groups, was evaluated as before, and the results summarized in Table I.

In Example 4, a reaction mixture of 200.2 g of the block copolymer of Comparative Example A, 50.0 g isopropanol, and 11.5 g methyl p-toluenesulfonate was refluxed for sixteen hours. The resulting block copolymer, with quaternized pendant ionic groups, was evaluated as before, and the results summarized in Table I.

## TABLE I - DISPERSION RATINGS

| | Example | | | |
|---|---|---|---|---|
| | Control A | 2 | 3 | 4 |
| **Pigment** | | | | |
| W552 | A1,X4,T4,M3 | A1,X1,T1,M1 | A1,M1,T1,X1 | - |
| W573 | A3 | M1,X3 | M1,X3 | 1,A3,T1 |
| W673 | - | - | - | M1 |
| W805 | A1 | M1,X1 | M1,X1 | M1 |
| W811 | A4 | M1,X3 | M1,X3 | M1 |
| W853 | A1 | M1,X4 | M1,X4 | M1 |

Example 5

An AB block copolymer was prepared having the general composition EHMA//DEAEMA 42//12. A reaction vessel was charged with 205 g toluene, 1.94 g initiator, and 0.111 mL catalyst. Simultaneously, a 1-hour feed of 0.222 mL catalyst in 5 mL toluene, and a 20 minute feed of 92.3 g 2-ethylhexyl methacrylate were started. After 40 minutes, 0.111 mL catalyst was added. After 3 hours more, 0.111 mL catalyst was added, and a ten-minute feed of 20.92 g 2-N,N-dimethylaminoethyl methacrylate was added. After 16 hours further, 5 mL of methanol was added. A portion (150 g) of the resulting resin was diluted with 37.61 g ethanol, 9.16 g benzyl bromide was added, and the resulting mixture was refluxed for 18 hours.

The copolymer was evaluated as a dispersant for standard pigments, and found to give an X4 rating for pigment W505, and X1 ratings for pigments W573, W805, W811, and W853.

Examples 6-7 and Comparative Examples B-H

In Examples 6-7 and Comparative Examples B-H, comparisons were made between blocked and random copolymers of similar composition, and with varying degrees of quaternization of the pendant ionic moieties on each.

In the preparation of the random copolymer, a reaction vessel was charged with 127.2 g toluene, 2.26 g initiator, 74.5 g BMA, 52.6 g MMA, 29.7 g 2-N,N-diethylaminoethyl methacrylate, and 0.030 mL catalyst. Cooling was used to maintain the reaction temperature below 40 C. After 4 hours reaction, 5 mL methanol was added.

In the preparation of the blocked copolymer, a reaction vessel was charged with 130.3 g toluene, 0.5 ml xylenes, 2.27 g initiator, 76.4 g BMA, and 54.0 g MMA, and 0.030 mL catalyst. Cooling was used to keep the reaction temperature below 40 C. After 70 minutes reaction, simultaneous feeds of 29.4 g DEAEMA over 10 minutes and 0.20 mL catalyst in 5 mL toluene over 20 minutes were started. After a further hour or reaction, 5 mL methanol was added.

The resulting copolymers, having tertiary pendant ionic groups and representing Comparative Examples B and C, were evaluated as dispersants for standard pigment W552, and both exhibited ratings of A3, M4, and T4.

In Comparative Examples D-H and Examples 6 and 7, the block copolymers of Comparative Examples B and C were each diluted by combining 65 g resin and 19.5 g isopropanol. A 20 g portion of the resulting resin was quaternized using methyl p-toluenesulfonate, using 24 mole %, 50 mole %, 75 mole %, or 95 mole % of methyl p-toluenesulfonate, based on amine content. The resulting solutions were held at room temperature for 10 days. The resulting quaternized copolymers were evaluated as pigment dispersants and the results summarized below.

6

## 25 % QUATERNIZED

| Example | D (RANDOM) | E (BLOCKED) |
|---|---|---|
| Pigment | | |
| W573 | A3, M3, X3 | A3, M1, X2 |
| W805 | A4, M4, X4 | A4, M4, X2 |
| W811 | A1, M1, X2 | A1, M1, X1 |
| W853 | A1, M1, X3 | A1, M1, X2 |

## 50 % QUATERNIZED

| Example | F (RANDOM) | 6 (BLOCKED) |
|---|---|---|
| W573 | X3 | X1 |
| W805 | X4 | X1 |
| W811 | X3 | X1 |
| W853 | X3 | X1 |

## 75 % QUATERNIZED

| Example | G (RANDOM) | 7 (BLOCKED) |
|---|---|---|
| W573 | X3 | X1 |
| W805 | X4 | X1 |
| W811 | X3 | X1 |

| W853 | X3 | X1 |
|------|----|----|

## 95 % QUATERNIZED

| Example | H (RANDOM) (A) | 8 (BLOCKED) |
|---------|----------------|-------------|
| W573 | A1, M2, X2 | A1, M1, X1 |
| W805 | A1, M3, X4 | A3, M4, X2 |
| W811 | A1, M1, X3 | A1, M1, X1 |
| W853 | A1, M1, X3 | A1, M1, X1 |

## Claims

1. A substantially non-aqueous dispersion comprising pigment, organic liquid, and a block copolymer consisting essentially of

   (a) about from 0.1 to 50%, by weight of the copolymer, of at least one block having a number average molecular weight of about from 200 to 10,000 and prepared from at least one monomer selected from compounds of the general formulas $CH_2 = CHCO_2R$ and $CH_2 = CCH_3CO_2R$, wherein R is alkyl or alkyl ether of 1-20 carbon atoms, the block further containing at least 2 ionic moieties which are pendant from the R groups and have the general formula $-A(R_1)_mX$, wherein A is selected from N, P, and S; $R_1$ is independently selected from alkyl or alkyl ether of 1-20 carbon atoms, phenyl or substituted phenyl, m is 3 when A is N or P, and m is 2 when A is S, and X is selected from halides and conjugate bases of organic acids, the backbone of the block being prepared from ethylenically unsaturated units, and

   (b) about from 99.9 to 50%, by weight of the copolymer, of at least one block having a number average molecular weight of about from 500 to 100,000 and prepared from monomers selected from compounds of the general formulas $CH_2 = CHCO_2R$ and $CH_2 = CCH_3CO_2R$, wherein R is alkyl or alkyl ether of 1-20 carbon atoms.

2. A substantially non-aqueous dispersion comprising pigment, organic liquid, and a block copolymer consisting essentially of

   (a) about from 0.1 to 50%, by weight of the copolymer, of at least one block having a number average molecular weight of about from 200 to 10,000 and prepared from at least one monomer selected from compounds of the general formulas $CH_2 = CHCO_2R$ and $CH_2 = CCH_3CO_2R$, wherein R is alkyl or alkyl ether of 1-20 carbon atoms, the block further containing at least 2 ionic moieties which are pendant from the R groups and have the general formula $-A(R_1)_mX$, wherein A is selected from N, P, and S; $R_1$ is independently selected from alkyl or alkyl ether of 1-20 carbon atoms, phenyl or substituted phenyl, m is 3 when A is N or P, and m is 2 when A is S, and X is selected from halides and conjugate bases of organic acids, the backbone of the block being prepared from ethylenically unsaturated units, and

   (b) about from 99.9 to 50%, by weight of the copolymer, of at least one block having a number average molecular weight of about from 500 to 100,000 and prepared from monomers selected from compounds of the general formulas $CH_2 = CHCO_2R$ wherein R is alkyl or alkyl ether of 1-20 carbon atoms and $CH_2 = CCH_3CO_2R$, wherein R is alkyl or alkyl ether of 1-4 carbon atoms.

3. A dispersion of Claim 1 or Claim 2 wherein the block copolymer is of the BAB configuration in which the copolymer contains at least two blocks of the type defined in (b).

4. A dispersion of Claim 1, Claim 2 or Claim 3 wherein A in the pendant ionic groups is N.

**5.** A dispersion of any one of Claims 1 to 4 wherein the conjugated bases of organic acids are selected from carboxylates, sulfonates and phosphates.

**6.** A dispersion of any one of Claims 1 to 5 wherein the pendant ionic groups of block (a) are derived from dimethyl aminoethyl methacrylate.

**7.** A dispersion of any one of Claims 1 to 5 wherein the pendant ionic groups of block (a) are derived from diethyl aminoethyl methacrylate.

**8.** A dispersion of any one of Claims 1 to 7 wherein block (b) is polymerized from methyl methacrylate.

**9.** A dispersion of any one of Claims 1 to 7 wherein block (b) is polymerized from butyl methacrylate.

**10.** A dispersion of Claim 1 or any one of Claims 3 to 7 wherein block (b) is polymerized from 2-ethylhexyl methacrylate.

**11.** A dispersion of Claim 10 wherein block (b) is polymerized from butyl methacrylate and 2-ethylhexyl methacrylate.

**12.** A dispersion of any one of Claims 1 to 11 wherein the block copolymer is prepared by group transfer polymerization techniques.

**13.** For use in a dispersion according to Claim 2, a block copolymer as defined in Claim 2.

**Patentansprüche**

**1.** Eine im wesentlichen nicht wässrige Dispersion, die Pigment, organische Flüssigkeit und ein Block-Copolymer umfaßt, die im wesentlichen aus

(a) etwa 0,1 bis 50 Gew.-% des Copolymers mit mindestens einem Block, der ein Zahlenmittelmolekulargewicht von etwa 200 bis 10 000 besitzt und aus mindestens einem Monomer hergestellt ist, das aus Verbindungen der allgemeinen Formeln $CH_2=CHCO_2R$ und $CH_2=CCH_3CO_2R$ ausgewählt ist, worin R eine Alkylgruppe oder ein Alkylether mit 1 bis 20 Kohlenstoffatomen ist, und der Block weiterhin mindestens 2 ionische Reste, die an den R-Gruppen angehängt sind und die allgemeine Formel $-A(R_1)_mX$ besitzen, worin A aus N, P und S ausgewählt wird; $R_1$ wird unabhängig aus Alkylgruppen oder Alkylether mit 1 bis 20 Kohlenstoffatomen, Phenyl- oder substituierten Phenylgruppen ausgewählt, m ist 3, wenn A N oder P ist und m ist 2, wenn A S ist, und X wird aus Halogeniden und konjugierten Basen organischer Säuren ausgewählt, enthält, wobei die Hauptkette des Blocks aus ethylenisch ungesättigten Einheiten hergestellt ist, und

(b) etwa 99,9 bis 50 Gew.-% des Copolymers aus mindestens einem Block, der ein Zahlenmittelmolekulargewicht von 500 bis 100 000 besitzt und aus Monomeren hergestellt ist, die aus Verbindungen der allgemeinen Formeln $CH_2=CHCO_2R$ und $CH_2=CCH_3CO_2R$, worin R eine Alkylgruppe oder Alkylether von 1 bis 20 Kohlenstoffatomen ist, ausgewählt werden,

besteht.

**2.** Eine im wesentlichen nicht wässrige Dispersion, die Pigment, organische Flüssigkeit und ein Block-Copolymer umfaßt, die im wesentlichen aus

(a) etwa 0,1 bis 50 Gew.-% des Polymers aus mindestens einem Block, der ein Zahlenmittelmolekulargewicht von 200 bis 10 000 besitzt und aus mindestens einem Monomer hergestellt ist, das aus Verbindungen der allgemeinen Formeln $CH_2=CHCO_2R$ und $CH_2=CCH_3CO_2R$, worin R eine Alkylgruppe oder Alkylether von 1 bis 20 Kohlenstoffatomen ist, ausgewählt wird, wobei der Block weiterhin mindestens 2 ionische Reste, die an die R-Gruppen angehängt sind und die allgemeine Formel $-A(R_1)_mX$ besitzen, worin A aus N, P und S ausgewählt wird; $R_1$ wird unabhängig aus Alkylgruppen oder Alkylether mit 1 bis 20 Kohlenstoffatomen, Phenyl- oder substituierten Phenylgruppen ausgewählt, m ist 3, wenn A N oder P ist und m ist 2, wenn A S ist, und X wird aus Halogeniden und konjugierten Basen organischer Säuren ausgewählt, enthält, wobei die Hauptkette des Blocks aus ethylenisch ungesättigten Einheiten hergestellt ist, und

(b) etwa 99,9 bis 50 Gew.-% des Copolymers aus mindestens einem Block, der ein Zahlenmittelmolekulargewicht von 500 bis 100 000 besitzt und aus Monomeren hergestellt ist, die aus Verbindun-

EP 0 329 873 B1

gen der allgemeinen Formeln $CH_2 = CHCO_2R$, worin R eine Alkylgruppe oder Alkylether von 1 bis 20 Kohlenstoffatomen ist, und $CH_2 = CCH_3CO_2R$, worin R eine Alkylgruppe oder Alkylether von 1 bis 4 Kohlenstoffatomen ist, ausgewählt werden,

besteht.

3. Dispersion nach Anspruch 1 oder Anspruch 2, worin das Block-Copolymer die Konfiguration BAB besitzt, in der das Copolymer mindestens zwei Blöcke des in (b) definierten Typs enthält.

4. Dispersion nach Anspruch 1, Anspruch 2 oder Anspruch 3, worin A in der angehängten ionischen Gruppe N ist.

5. Dispersion nach einem der Ansprüche 1 bis 4, worin die konjugierten Basen von organischen Säuren aus Carboxylaten, Sulfonaten und Phosphaten ausgewählt werden.

6. Dispersion nach einem der Ansprüche 1 bis 5, worin sich die angehängten ionischen Gruppen von Block (a) von Dimethylaminoethylmethacrylat ableiten.

7. Dispersion nach einem der Ansprüche 1 bis 5, worin sich die angehängten ionischen Gruppen von Block (a) von Diethylaminoethylmethacrylat ableiten.

8. Dispersion nach einem der Ansprüche 1 bis 7, worin Block (b) aus Methylmethacrylat polymerisiert wird.

9. Dispersion nach einem der Ansprüche 1 bis 7, worin Block (b) aus Butylmethacrylat polymerisiert wird.

10. Dispersion nach Anspruch 1 oder einem der Ansprüche 3 bis 7, worin Block (b) aus 2-Ethylhexylmethacrylat polymerisiert wird.

11. Dispersion nach Anspruch 10, worin Block (b) aus Butylmethacrylat und 2-Ethylhexylmethacrylat polymerisiert wird.

12. Dispersion nach einem der Ansprüche 1 bis 11, worin das Blockcopolymer durch Gruppenübertragungspolymerisationstechnik hergestellt wird.

13. Block-Copolymer wie in Anspruch 2 definiert, zur Verwendung in einer Dispersion nach Anspruch 2.

**Revendications**

1. Une dispersion sensiblement non aqueuse comprenant un pigment, un liquide organique et un copolymère séquencé constitué essentiellement de

(a) environ 0,1 à 50 %, en poids du copolymère, d'au moins une séquence ayant un poids moléculaire moyen en nombre d'environ 200 à 10 000 et préparée à partir d'au moins un monomère choisi parmi les composés des formules générales $CH_2 = CHCO_2R$ et $CH_2 = CCH_3CO_2R$, où R est un groupe alkyle ou éther d'alkyle de 1 à 20 atomes de carbone, la séquence contenant en outre au moins 2 groupements ioniques qui sont fixés latéralement aux groupes R et répondent à la formule générale $-A(R_1)_mX$, où A est choisi parmi M, P et S ; $R_1$ est choisi indépendamment parmi un groupe alkyle ou éther d'alkyle de 1 à 20 atomes de carbone, un groupe phényle ou phényle substitué, m est 3 lorsque A est M ou P, et m est 2 lorsque A est S, et X est choisi parmi les halogénures et les bases conjuguées d'acides organiques, le squelette de la séquence étant préparé à partir de motifs éthyléniquement insaturés, et

(b) environ 99,9 à 50 %, en poids du copolymère, d'au moins une séquence ayant un poids moléculaire moyen en nombre d'environ 500 à 100 000 et préparée à partir de monomères choisis parmi les composés des formules générales $CH_2 = CHCO_2R$ et $CH_2 = CCH_3CO_2R$, où R est un groupe alkyle ou éther d'alkyle de 1 à 20 atomes de carbone.

2. Une dispersion sensiblement non aqueuse comprenant un pigment, un liquide organique et un copolymère séquencé constitué essentiellement de

(a) environ 0,1 à 50 %, en poids du copolymère, d'au moins une séquence ayant un poids moléculaire moyen en nombre d'environ 200 à 10 000 et préparée à partir d'au moins un monomère choisi parmi les composés des formules générales $CH_2 = CHCO_2R$ et $CH_2 = CCH_3CO_2R$, où R est un groupe alkyle ou éther d'alkyle de 1 à 20 atomes de carbone, la séquence contenant en outre au moins 2 groupements ioniques qui sont fixés latéralement aux groupes R et répondent à la formule générale $-A(R_1)_mX$, où A est choisi parmi N, P et S ; $R_1$ est choisi indépendamment parmi un groupe alkyle ou éther d'alkyle de 1 à 20 atomes de carbone, un groupe phényle ou phényle substitué, m est 3 lorsque A est M ou P, et m est 2 lorsque A est S, et X est choisi parmi les halogénures et les bases conjuguées d'acides organiques, le squelette de la séquence étant préparé à partir de motifs éthyléniquement insaturés, et

(b) environ 99,9 à 50 %, en poids du copolymère, d'au moins une séquence ayant un poids moléculaire moyen en nombre d'environ 500 à 100 000 et préparée à partir de monomères choisis parmi les composés des formules générales $CH_2 = CHCO_2R$, où R est un groupe alkyle ou éther d'alkyle de 1 à 20 atomes de carbone, et $CH_2 = CCH_3CO_2R$, où R est un groupe alkyle ou éther d'alkyle de 1 à 4 atomes de carbone.

3. Une dispersion de la revendication 1 ou la revendication 2, dans laquelle le copolymère séquencé possède la configuration BAB dans laquelle le copolymère contient au moins deux séquences du type défini en (b).

4. Une dispersion de la revendication 1, la revendication 2 ou la revendication 3, dans laquelle A dans les groupes ioniques latéraux est N.

5. Une dispersion de l'une quelconque des revendications 1 à 4, dans laquelle les bases conjuguées d'acides organiques sont choisies parmi les carboxylates, sulfonates et phosphates.

6. Une dispersion de l'une quelconque des revendications 1 à 5, dans laquelle les groupes ioniques latéraux de la séquence (a) sont dérivés de méthacrylate de diméthylaminoéthyle.

7. Une dispersion de l'une quelconque des revendications 1 à 5, dans laquelle les groupes ioniques latéraux de la séquence (a) sont dérivés de méthacrylate de diéthylaminoéthyle.

8. Une dispersion de l'une quelconque des revendications 1 à 7, dans laquelle la séquence (b) est préparée par polymérisation de méthacrylate de méthyle.

9. Une dispersion de l'une quelconque des revendications 1 à 7, dans laquelle la séquence (b) est préparée par polymérisation de méthacrylate de butyle.

10. Une dispersion de la revendication 1 ou l'une quelconque des revendications 3 à 7, dans laquelle la séquence (b) est préparée par polymérisation de méthacrylate de 2-éthylhexyle.

11. Une dispersion de la revendication 10, dans laquelle la séquence (b) est préparée par polymérisation de méthacrylate de butyle et de méthacrylate de 2-éthylhexyle.

12. Une dispersion de l'une quelconque des revendications 1 à 11, dans laquelle le copolymère séquencé est préparé par des techniques de polymérisation par transfert de groupe.

13. Pour son utilisation dans une dispersion selon la revendication 2, un copolymère séquencé tel que défini dans la revendication 2.